(19) **Europäisches Patentamt**

**European Patent Office**

**Office européen des brevets**

(11) **EP 1 354 421 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(51) Int Cl.$^7$: **H04B 1/707**

(21) Anmeldenummer: 02702257.3

(22) Anmeldetag: **10.01.2002**

(86) Internationale Anmeldenummer:
**PCT/EP2002/000196**

(87) Internationale Veröffentlichungsnummer:
**WO 2002/058264 (25.07.2002 Gazette 2002/30)**

(54) **VERFAHREN UND VORRICHTUNG ZUR SYNCHRONISATION AUF EINE PILOTSEQUENZ EINES CDMA-SIGNALS**

METHOD AND DEVICE FOR SYNCHRONISING A CDMA SIGNAL TO A PILOT SEQUENCE

PROCEDE ET DISPOSITIF POUR SYNCHRONISER UN SIGNAL AMRC SUR UNE SEQUENCE PILOTE

(84) Benannte Vertragsstaaten:
**DE FR GB**

(30) Priorität: **22.01.2001 DE 10102709**

(43) Veröffentlichungstag der Anmeldung:
**22.10.2003 Patentblatt 2003/43**

(73) Patentinhaber: **Rohde & Schwarz GmbH & Co. KG**
**81671 München (DE)**

(72) Erfinder:
- **EPPINGER, Bernd**
  **81735 München (DE)**
- **KÜHNE, Jens**
  **85614 Kirchseeon (DE)**
- **SCHEIDIG, Hardy**
  **84428 Buchbach (DE)**

(74) Vertreter: **Körfer, Thomas et al**
**Mitscherlich & Partner,**
**Patent- und Rechtsanwälte,**
**Sonnenstrasse 33**
**80331 München (DE)**

(56) Entgegenhaltungen:
**WO-A-00/55992**

- **HOLBROOK R W ET AL: "A crosscorrelation reduction receiver robust to the near-end effect" PROCEEDINGS OF THE ANNUAL INTERNATIONAL PHOENIX CONFERENCE ON COMPUTERS AND COMMUNICATIONS. SCOTTSDALE, APR. 1 - 3, 1992, NEW YORK, IEEE, US, Bd. CONF. 11, 1. April 1992 (1992-04-01), Seiten 189-196, XP010062391 ISBN: 0-7803-0605-8**

**Beschreibung**

Die Erfindung betrifft ein Verfahren und eine Vorrichtung zur Synchronisation auf eine Pilotsequenz eines CDMA-Signals.

CDMA (Code Division Multiple Access)-Signale werden beispielsweise zur Übertragung bei der dritten Generation Mobilfunk, beispielsweise nach dem IS-95, CDMA-2000 oder dem 3GPP Standard verwendet.

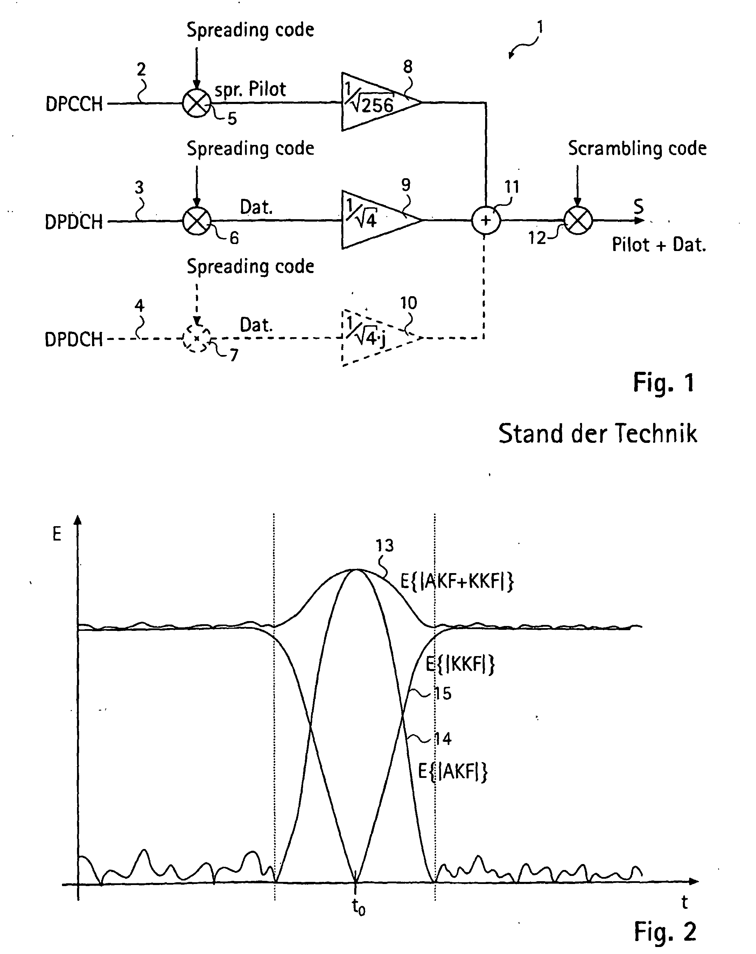

Zum besseren Verständnis der Erfindung wird zunächst anhand von Fig. 1 ein übliches Verfahren zur Generierung von CDMA-Signalen erklärt. Daran wird die der Erfindung zugrunde liegende Problematik erläutert. Im Signalgenerator 1 wird aus einem Pilotkanal 2, auch DPCCH genannt, und mehreren Datenkanäle 3, 4, auch DPDCH genannt, das CDMA-Signal erzeugt. Der Pilotkanal 2 und Datenkanäle 3, 4... werden mit einem im allgemeinen unterschiedlichen Spreadingcode in Multiplikatoren 5, 6 und 7 in eine gespreizte Pilotsequenz (spr. Pilot) und gespreizte Datensequenzen (Dat.) umgewandelt. Diese werden bedingt durch unterschiedliche Verstärkungsfaktoren der Verstärker 8, 9, 10 in unterschiedlicher Gewichtung einem Summierer 11 zugeführt. In einem weiteren Multiplizierer 12 wird das Ausgangssignal des Summierers 11 mit dem Scramblingcode multipliziert, so daß ein Gesamtsignal S entsteht. S besteht aus einem Datenanteil, und einem Pilotanteil (Pilotsequenz). Der Pilotanteil besteht aus der gespreizten Pilotsequenz, die mit dem Scrambling-Code multipliziert wurde. Während die Datenkanäle 3, 4 beispielsweise mit einem Gewichtungsfaktor $1/\sqrt{4}$ eingehen, geht der Pilotkanal 2 nur mit einem Gewichtungsfaktor $1/\sqrt{256}$ ein. Der Spreadingcode des Pilotkanals 2 ist orthogonal zu allen Spreadingcodes der Datenkanäle 3, 4 etc.

Bei der Signalaufbereitung auf der Empfangsseite besteht die Notwendigkeit, aus dem Gesamtsignal S die Pilotsequenz (Pilot) zu extrahieren und aus der Pilotsequenz den Chiptakt und das Empfangstiming zurückzugewinnen. Das CDMA-Signal untergliedert sich in slots (Zeitschlitze) und die gespreizte Pilotsequenz ist zyklisch mit einer Pilot-Symbollänge, die kleiner als die slot-Länge ist. Durch Bestimmung der Lage der empfangenen Pilotsequenz kann somit der aktuelle Zeitversatz (timing) gegenüber der slot-Grenze bestimmt werden. Die Pilotsequenz ist dem Empfänger bekannt und wird durch den Standard festgelegt.

Der Zeitversatz (Timing) der Pilotsequenz wird üblicherweise durch Korrelation des Empfangssignals mit der bekannten Pilotsequenz gewonnen, die in dem Gesamtsignal S jedoch nur mit der Gewichtung $1/\sqrt{256}$ beinhaltet ist, während jeder Datenkanal 3, 4 mit einer Gewichtung $1/\sqrt{4}$ eingeht. Gegenüber dem nur einen Pilotkanal 2 sind eine Vielzahl von Datenkanälen 3, 4 vorhanden, die mit pseudozufälligen Nutzdaten moduliert sind. Die Nutzdaten in den Datenkanälen 3, 4 wirken somit gegenüber der Pilotsequenz als orthogonale Störungen. Es können auch nicht beliebig viele Korrelationen gemittelt werden, da das Ergebnis innerhalb einer begrenzten Zeit vorliegen muß und auf Grund eines üblicherweise vorhandenen Frequenzversatzes und der damit einhergehenden Phasenverschiebung nur sehr wenige Pilotsequenzen kohärent gemittelt werden können.

Für die iterative Detektion von mehreren überlagerten und zeitversetzten Synchronisationssequenzen, die von verschiedenen Basisstationen an Mobilstationen gesendet werden und sich gegenseitig stören, existiert bereits ein Verfahren nach WO 00/55992 A. Das Verfahren funktioniert allerdings nur, wenn zunächst mindestens eine der Synchronisationssequenzen konventionell detektiert werden kann. Gemäß Aufgabenstellung ist das beim Szenario des vorliegenden Patents nicht der Fall. Außerdem nutzt WO 00/55992 A einen Zeitversatz zwischen Nutz- und jeweiligem Störsignal, der für das vorliegende Szenario ebenfalls nicht vorhanden ist. Aufgrund dieser und weiterer Eigenschaften ist die WO 00/55992 A nicht geeignet, die Aufgabe zu lösen, für die das erfindungsgemäße Verfahren gedacht ist. Dieses Verfahren wird im Folgenden vorgestellt.

Der Erfindung liegt deshalb die Aufgabe zu Grunde, ein Verfahren und eine Vorrichtung zur Synchronisation auf eine Pilotsequenz eines CDMA-Signals anzugeben, das bzw. die auch bei einem geringen Pegel der Pilotsequenz gegenüber dem Pegel der gleichzeitig übertragenen orthogonalen Datensequenzen eingesetzt werden kann und innerhalb relativ kurzer Zeit ein Ergebnis liefert.

Die Aufgabe wird bezüglich des Verfahrens durch die Merkmale des Anspruchs 1 und bezüglich der Vorrichtung durch die Merkmale des Anspruchs 6 gelöst.

Erfindungsgemäß erfolgt zuerst die übliche Korrelation des aus Pilotsequenz und Datensequenz bestehenden Gesamtsignals mit einer Referenz-Pilotsequenz. Durch Subtraktion des Korrelationsergebnisses eines oder mehrerer vorhergehenden Symbole der Pilotsequenz von dem aktuellen Korrelationsergebnis wird die Pilotsequenz unterdrückt. Nachfolgend erfolgt eine inkohärente Mittelung. Schließlich wird das Maximum gesucht.

Die Unteransprüche beinhalten vorteilhafte Weiterbildungen des Verfahrens bzw. der Vorrichtung.

Durch Subtraktion des inkohärenten Mittelungsergebnisses der Datensequenzen von einem zusätzlich erzeugten kohärenten Mittelungsergebnis des Korrelationsergebnisses entsteht ein Signal mit einem relativ deutlichen Maximum, das mit höherer Sicherheit detektiert werden kann. Das Ergebnis der kohärenten Mittelung und der inkohärenten Mittelung kann vor der Subtraktion einer spezifischen Gewichtung unterworfen werden.

Vorteilhaft erfolgt vor der Bestimmung des Maximums noch eine inkohärente Mittelung über mehrere slots des CDMA-Signals.

Kohärente Mittelung bedeutet, daß eine Summation über mehrere Symbole der Pilotsequenzen stattfindet, bevor eine Betragsbildung erfolgt, während inkohärente Mittelung vorhergehende Betragsbildungen und anschließende Summation über mehrere Symbole der Pilotsequenz bedeutet.

Ein Ausführungsbeispiel der Erfindung wird nachfolgend unter Bezugnahme auf die Zeichnung näher beschrieben. In der Zeichnung zeigen:

Fig. 1 eine schematische Darstellung einer senderseitigen Signalaufbereitungseinrichtung eines CDMA-Signals,

Fig. 2 ein Diagramm zur Erläuterung verschiedener Erwartungswerte,

Fig. 3A die Wahrscheinlichkeitsdichteverteilung des Realteils am Ausgang des Korrelators für ein reines Datensignal ohne Pilotsequenz,

Fig. 3B die Wahrscheinlichkeitsdichteverteilung des Betrags am Ausgang des Korrelators für ein reines Datensignal ohne Pilotsequenz,

Fig. 3C die Wahrscheinlichkeitsdichteverteilung des gemittelten Betrags am Ausgang des Korrelators für ein reines Datensignal ohne Pilotsequenz und

Fig. 4 ein Blockschaltbild einer erfindungsgemäßen Vorrichtung zur Synchronisation auf eine Pilotsequenz eines CDMA-Signals.

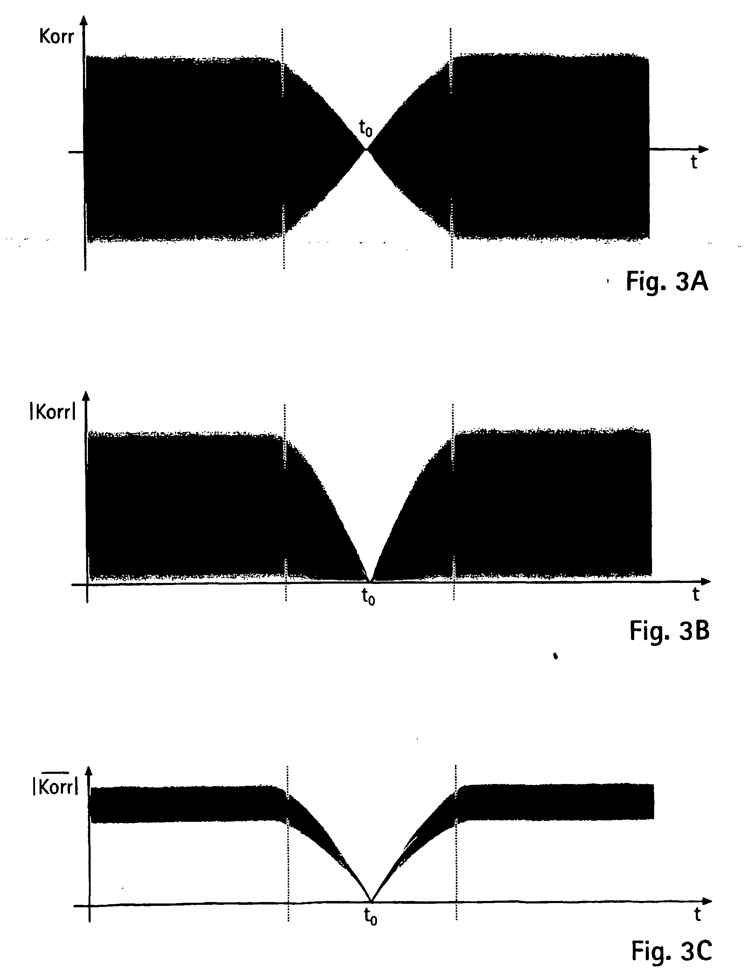

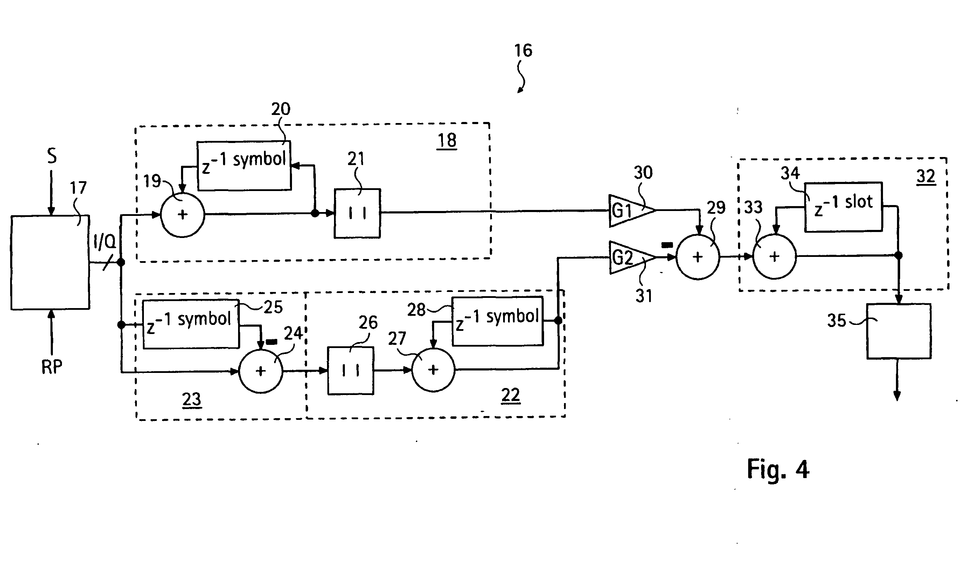

Bevor anhand von Fig. 4 ein Ausführungsbeispiel einer erfindungsgemäßen Vorrichtung zur Synchronisation auf eine Pilotsequenz eines CDMA-Signals näher beschrieben wird, werden die der erfindungsgemäßen Idee zu Grunde liegenden Überlegungen zunächst anhand von Fig. 2 und Fig. 3A bis 3C erläutert.

Fig. 2 zeigt den Erwartungswert E als Funktion der Zeit t am Ausgang eines Korrelators, mit welchem eine Korrelation des aus der Pilotsequenz und mehreren Datensequenzen bestehenden Gesamtsignals S mit einer Referenz-Pilotsequenz RP, die dem Empfänger bekannt ist, vorgenommen wird. Der Erwartungswert am Ausgang des Korrelators ist durch die Kurve 13 veranschaulicht. Man kann sich die Korrelation des Gesamtsignals S mit der Referenz-Pilotsequenz RP entstanden aus einer Autokorrelation der Referenz-Pilotsequenz (Korrelation mit der Referenz-Pilotsequenz mit sich selbst) und einer Kreuzkorrelation der orthogonalen Datensequenzen mit einer Referenz-Pilotsequenz vorstellen, so daß der Gesamterwartungswert E{|AKF+KKF|} der Kurve 13 aus dem Erwartungswert E{|AKF|} (Kurve 14 in Fig. 2) der Autokorrelation der Pilotsequenz und dem Erwartungswert E{|KKF|} (Kurve 15 in Fig. 2) der Kreuzkorrelation der orthogonalen Datensequenzen zusammengesetzt ist. Wenn nur die Pilotsequenz übertragen wird, dann erzeugt der Korrelator an seinem Ausgang ein Signal mit dem Erwartungswert E{|AKF|} (Kurve 14). Dabei entsteht ein Maximum zum Zeitpunkt $t_0$, wobei die Zeit $t_0$ den Zeitversatz zwischen der empfangenen Pilotsequenz und Referenzpilotsequenz kennzeichnet. Das Maximum der Kurve 13, also des Erwartungswerts einer Korrelation der Referenz-Pilotsequenz mit einem aus Pilotsequenzen und Datensequenzen zusammengesetzten Gesamtsignal, ist im Vergleich zur Kurve 14 kleiner ausgeprägt, da die orthogonalen Daten störend wirken.

Wenn nur orthogonale Datensequenzen ohne Pilotsequenz übertragen werden, dann erzeugt der Korrelator ein Ausgangssignal, dessen leistungsmäßiger Erwartungswert E{|KKF|} zum Symbolzeitpunkt $t_0$ genau 0 und damit minimal ist. Dies ergibt sich aus der Orthogonalität der Pilotsequenz zu den Datensequenzen der unterschiedlichen Datenkanäle 3, 4. Die Orthogonalitäts-Bedingung ist nur beim richtigen Timing zum richtigen Symbolzeitpunkt $t_0$ exakt erfüllt, so daß nur dort der Erwartungswert der Korrelation 0 ist. Innerhalb einer gewissen zeitlichen Bandbreite um den Zeitpunkt $t_0$ steigt der Erwartungswert kontinuierlich an, bis auf Grund der Zeitverschiebung die Datensequenzen völlig unkorreliert mit der Referenz-Pilotsequenz sind und deshalb der Erwartungswert in ein konstantes Plateau übergeht.

Wenn Pilot und Daten übertragen werden, addieren sich die Kurven der Erwartungswerte E{|AKF|} und E{|KKF|} näherungsweise leistungsmäßig. Dabei heben sich die Effekte des Maximums von E{|AKF|} und des Minimums von E{|KKF|} teilweise auf und es entsteht ein Signal, dessen leistungsmäßiger Erwartungswert E{|AKF+KKF|} nur noch einen sehr kleinen Peak hat, der zudem eine große Standardabweichung hat, d. h. stark verrauscht ist. Spätestens, wenn E{|KKF|} auf Grund von Datensequenzen mit großem Pegel so groß wird, wie der Peak von E{|AKF|}, verschwindet der Peak des Gesamtsignals E{|AKF+KKF|} ganz und es ist prinzipiell keine Detektion mehr möglich, selbst wenn danach noch inkohärent gemittelt wird.

Die Erfindung setzt an der Erkenntnis der vorstehend beschriebenen Aufteilung des Erwartungswertes an und schlägt vor, neben dem Maximum von E{|AKF+KKF|} auch das Minimum von E{|KKF|} zu detektieren und beide Informationen zur Bestimmung des Zeitversatzes $t_0$ heranzuziehen.

Dazu wird eine Vorrichtung 16 vorgeschlagen, von welcher ein Ausführungsbeispiel in Fig. 4 dargestellt ist.

Einem Korrelator 17 wird das empfangene Gesamtsignal S, das neben der Pilotsequenz (Pilot) auch mehrere orthogonale Datensequenzen (Dat.) beinhaltet, zugeführt. Die Koeffizienten des Korrelators 17 sind die dem Empfänger bekannte Referenz-Pilotsequenz RP. Der Korrelator 17 erzeugt ein komplexes Ausgangssignal bestehend aus Real- und Imaginärteil. Dieses Ausgangssignal wird zunächst einem kohärenten Mittelwertbilder 18 zugeführt. Der kohärente Mittelwertbilder 18 besteht im Ausführungsbeispiel aus einem ersten Summierer 19, einem zweiten Verzögerer 20 und einem ersten Betragsbilder 21. Der Verzögerer 20 verzögert das Ausgangssignal des Summierers 19 um eine Symbollänge der Pilotsequenz. Der Ausgang des Verzögerers 20 ist mit einem Eingang des Summierers 19 verbunden, während der andere Eingang des Summierers 19 mit dem Ausgang des Korrelators 17 in Verbindung steht. Die Ausgangsfolge des Korrelators 17 wird somit in dem kohärenten Mittelwertbilder 18 kohärent aufsummiert und anschließend wird in dem Betragsbilder 21 der Betrag des komplexen Signals gebildet. Da dem kohärenten Mittelwertbilder 18 das Ausgangssignal des Korrelators 17 bei übertragenen Pilot- und Datensequenzen zugeführt wird, entsteht an dessen Ausgang ein Signal, dessen Erwartungswert die Kurvenform der Kurve 13 in Fig. 2 aufweist.

Ferner ist erfindungsgemäß ein inkohärenter Mittelwertbilder 22 vorgesehen. Vor dem inkohärenten Mittelwertbilder 22 befindet sich eine Subtrahiereinrichtung 23 bestehend aus einem ersten Subtrahierer 24 und einem ersten Verzögerer 25. Der erste Verzögerer 25 verzögert das Ausgangssignal des Korrelators 17 ebenfalls um die Symbollänge der Pilotsequenz, so daß an dem +Eingang des Subtrahierers 24 das aktuelle Ausgangssignal des Korrelators 17 und an dem - Eingang das um die Symbollänge der Pilotsequenz verzögerte Ausgangssignal des Korrelators 17 anliegt. Da jedoch die Pilotsequenz innerhalb ihrer Symbollänge periodisch ist, entsteht am Ausgang des Subtrahierers 24 ein Signal, bei welchem die Pilotsequenz unterdrückt ist, und das nur noch aus dem Kreuzkorrelationsanteil der orthogonalen Datensequenzen besteht. Dieses Signal wird inkohärent gemittelt, d. h. es erfolgt zunächst eine Betragsbildung in dem Betragsbilder 26 und nachfolgend eine Summation mit dem zweiten Summierer 27 und dem dritten Verzögerer 28. Der dritte Verzögerer 28 verzögert wiederum um die Symbollänge der Pilotsequenz und verbindet den Ausgang des zweiten Summierers 27 mit einem seiner Eingänge, während der andere Eingang des zweiten Summierers 27 mit dem Ausgang des Betragsbilders 26 verbunden ist. Am Ausgang des inkohärenten Mittelers 22 entsteht somit ein Signal, dessen Erwartungswert der Kurve 15 in Fig. 2 entspricht.

Die Ausgangssignale des kohärenten Mittelwertbilders 18 und des inkohärenten Mittelwertbilders 22 werden einen zweiten Subtrahierer 29 zugeführt, so daß von dem Ausgangssignal des kohärenten Mittelwertbilders 18 das Ausgangssignal des inkohärenten Mittelwertbilders 22 subtrahiert wird. Zwischen dem Ausgang des kohärenten Mittelwertbilders 18 und dem Subtrahierer 29 und/oder zwischen dem Ausgang des inkohärenten Mittelwertbilders 22 und dem Subtrahierer 29 kann noch ein Verstärkungs- oder Dämpfungselement 30 bzw. 31 vorgesehen sein, so daß die Ausgänge der Mittelwertbilder 18 bzw. 22 mit Gewichtsfaktoren G1 bzw. G2 gewichtet werden. Die Gewichtsfaktoren G1 und G2 können empirisch ermittelt werden. Am Ausgang des Subtrahierers 29 entsteht somit ein Signal, dessen Erwartungswert der Kurve 14 in Fig. 2 entspricht, d. h. ein Signal mit gegenüber der Kurve 13 wesentlich ausgeprägterem Maximum des Erwartungswertes . Mit einer Einrichtung 35 wird das Maximum des Ausgangssignals des zweiten Subtrahierers 29 und somit der gesuchte Zeitversatz $t_0$ ermittelt.

Zwischen dem zweiten Subtrahierer 29 und der Einrichtung 35 zur Maximumsuche kann ein weiterer Mittelwertbilder 32 vorgesehen sein, der aus einem Summierer 33 und einem Verzögerer 34, der den Ausgang des Summierers 33 mit einem seiner Eingänge verbindet, besteht. Die Verzögerung in diesem Verzögerer 34 erfolgt über die Länge eines slots (Zeitschlitzes) des CDMA-Signals, so daß mit dem Mittelwertbilder 32 eine Mittelung über so viele slots erfolgt, wie dies auf Grund der erlaubten Reaktionszeit möglich ist.

Zum besseren Verständnis der Wirkungsweise der Subtrahiereinrichtung 23, die einen E{|KKF|}-Detektor implementiert, ist in Fig. 3A die Wahrscheinlichkeitsdichteverteilung des Ausgangs-Signals des ersten Subtrahierers 24 über die Zeitverschiebung dargestellt. Dabei wird angenommen, daß das Gesamtsignal S Datensequenzen enthält. Das Signal enthält wegen des Subtrahierers 24 nur noch die Kreuzkorrelationsanteile der Datensequenzen und keinen Autokorrelationsanteil der Pilotsequenz mehr. Während die Wahrscheinlichkeitsdichte außerhalb des Zeitraums $t_0 \pm t_{chip}$ eine relativ große Standardabweichung aufweist, ist die Streuung zum Zeitpunkt $t_0$ nahezu 0 und der Erwartungswert ist ebenfalls 0. In Fig. 3A ist nur der Realteil des insgesamt komplexen Signals dargestellt.

Fig. 3B zeigt die Wahrscheinlichkeitsdichteverteilung des Signals am Ausgang des Betragbilders 26 während Fig. 3C das Signal am Ausgang des inkohärenten Mittelwertbilders 22 zeigt.

Außerhalb des Zeitraums $t_0 \pm t_{chip}$ führt die Betragsbildung die komplexe Gaußverteilung am Eingang des Betragsbilders in eine reelle Wahrscheinlichkeitsdichteverteilung der Form

$$x \cdot e^{-x^2} \qquad \text{für x>0}$$

$$0 \qquad \text{für x}\leq 0 \text{ über. Diese Verteilung hat einen}$$

von Null deutlich verschiedenen Mittelwert, aber noch eine beträchtliche Standardabweichung, wie Fig. 3B zeigt. Durch anschließende Mittelung kann die Standardabweichung reduziert werden, wie in Fig. 3C dargestellt.

Die Figuren 3A bis 3C verdeutlichen, daß durch Betragsbildung und anschließende Mittelung sich der Erwartungswert E{|KKF|} aus Fig. 2 näherungsweise ermitteln läßt.

Das erfindungsgemäße Verfahren und die erfindungsgemäße Vorrichtung liefern auch ein zuverlässiges Maß dafür, ob überhaupt ein CDMA-Signal bestehend aus Datensequenzen und Pilotsequenz vorliegt. Liegt statt dessen weißes Rauschen vor, dann wird das Ausgangssignal des kohärenten Mittelers 18 durch den Dezimationsgewinn abgeschwächt, während die Amplitude des Signals des inkohärenten Mittelwertbilders 22 gleich bleibt. Deshalb ist in diesem Fall das Signal am Ausgang des Subtrahierers 29 meistens negativ und die Wahrscheinlichkeit dafür, daß ein positiver Wert vorliegt, ist äußerst gering. Liegt ein CDMA-Signal in der beschriebenen Form vor, dann liefert der kohärente Mittelwertbilder 18 zum Zeitpunkt des richtigen Timings $t_0$ einen positiven Wert, nämlich die Amplitude der Pilotsequenz, während der inkohärente Mittelwertbilder 22 zum Zeitpunkt $t_0$ kein Signal erzeugt. Am Ausgang des Subtrahierers 29 liegt somit ein positives Signal vor. Somit ist das Vorzeichen des Ausgangssignals des Subtrahierers 29 ein Kriterium dafür, ob ein CDMA-Signal empfangen wird. Dies kann sowohl bei Meßsystemen, als auch im Empfänger einer Mobilstation oder eine Basisstation ausgenutzt werden.

**Patentansprüche**

1. Verfahren zur Synchronisation auf eine Pilotsequenz (Pilot) eines CDMA-Signals, die mit Datensequenzen (Dat.) überlagert ist, mit folgenden Verfahrensschritten:

   - Korrelieren (17) des Gesamtsignals (S) aus übertragener Pilotsequenz (Pilot) und übertragenen Datensequenzen (Dat.) mit einer Referenz-Pilotsequenz (RP),
   - Subtrahieren (24) des um eine oder mehrere Symbollängen der Pilotsequenz (Pilot) verzögerten Korrelationsergebnisses von dem aktuellen Korrelationsergebnis zur Unterdrückung der Pilotsequenz (Pilot) und nachfolgendes inkohärentes Mitteln (22) über mehrere Symbollängen der Pilot sequenz (Pilot),
   - zusätzliches kohärentes Mitteln (18) des Korrelationsergebnisses über mehrere Symbollängen der Pilotsequenz (Pilot),
   - Subtrahieren (29) des inkohärenten Mittelungsergebnisses von dem kohärenten Mittelungsergebnis und
   - Bestimmen (35) des Maximums.

2. Verfahren nach Anspruch 1,
   **dadurch gekennzeichnet,**
   **daß** das CDMA-Signal in mehrere Zeitschlitze (slot) unterteilt ist und nach der Subtraktion (29) des inkohärenten Mittelungsergebnisses von dem kohärenten Mittelungsergebnis eine Mittelung (32) über mehrere Zeitschlitze (slot) erfolgt.

3. Verfahren nach Anspruch 1 oder 2,
   **dadurch gekennzeichnet,**

**daß** die kohärente Mittelung (18) durch Summation (19) über mehrere Symbollängen der Pilotsequenz (Pilot) und anschließende Betragsbildung (21) erfolgt.

4. Verfahren nach einem der Ansprüche 1 bis 3,
   **dadurch gekennzeichnet,**
   **daß** die inkohärente Mittelung (22) durch Betragsbildung (26) und anschließende Summation (27) über mehrere Symbollängen der Pilotsequenz (Pilot) erfolgt.

5. Verfahren nach einem der Ansprüche 1 bis 4,
   **dadurch gekennzeichnet,**
   **daß** vor dem Subtrahieren (29) des inkohärenten Mittelungsergebnisses von dem kohärenten Mittelungsergebnis eine Gewichtung (30, 31) des inkohärenten Mittelungsergebnisses und des kohärenten Mittelungsergebnisses erfolgt.

6. Vorrichtung (16) zur Synchronisation auf eine Pilotsequenz (Pilot) eines CDMA-Signals, die mit Datensequenzen (Dat) überlagert ist, mit
   einem Korrelator (17), der das Gesamtsignals (S) aus übertragener Pilotsequenz (Pilot) und übertragenen Datensequenzen (Dat) mit einer Referenz-Pilotsequenz (RP) korreliert,
   einem ersten Verzögerer (25), der das Ausgangssignal der Korrelators (17) um ein oder mehrere Symbollängen der Pilotsequenz (Pilot) verzögert,
   einem ersten Subtrahierer (24), der vom aktuellen Ausgangssignal des Korrelators (17) das in dem ersten Verzögerer (25) verzögerte Ausgangssignal subtrahiert, einem inkohärenten Mittelwertbilder (22), der das Ausgangssignal des ersten Subtrahierers (24) über mehrere Symbollängen der Pilotsequenz (Pilot) inkohärent mittelt,
   einem kohärenten Mittelwertbilder (18), der das Ausgangssignal des Korrelators (17) über mehrere Symbollängen der Pilotsequenz (Pilot) kohärent mittelt,
   einem zweiten Subtrahierer (29), der das Ausgangssignal des inkohärenten Mittelwertbilders (22) von dem Ausgangssignal des kohärenten Mittelwertbilders (18) subtrahiert und
   einer Einrichtung (35), die das Maximum des Ausgangssignals bestimmt.

7. Vorrichtung nach Anspruch 6,
   **dadurch gekennzeichnet,**
   **daß** das CDMA-Signal in mehrere Zeitschlitze (slot) unterteilt ist und nach dem zweiten Subtrahierer (29) ein Mittelwertbilder (32) angeordnet ist, der das Ausgangssignal des zweiten Subtrahierers (29) über mehrere Zeitschlitze (slots) mittelt.

8. Vorrichtung nach Anspruch 6 oder 7,
   **dadurch gekennzeichnet,**

**daß** der kohärente Mittelwertbilder (18) aus einem ersten Summierer (19), einem den Ausgang des ersten Summierers (19) mit einem Eingang des ersten Summierers (19) verbindenden zweiten Verzögerer (20), der um ein oder mehrere Symbollängen der Pilotsequenz (Pilot) verzögert, und einem nach dem ersten Summierer (19) angeordneten ersten Betragsbilder (21) besteht.

9. Vorrichtung nach einem der Ansprüche 6 bis 8,
   **dadurch gekennzeichnet,**
   **daß** der inkohärente Mittelwertbilder (22) aus einem zweiten Summierer (27), einem den Ausgang des zweiten Summierers (27) mit einem Eingang des zweiten Summierers (27) verbindenden dritten Verzögerer (28), der um ein oder mehrere Symbollängen der Pilotsequenz (Pilot) verzögert, und einem vor dem zweiten Summierer (27) angeordneten zweiten Betragsbilder (26) besteht.

10. Vorrichtung nach einem der Ansprüche 6 bis 9,
    **dadurch gekennzeichnet,**
    **daß** nach dem kohärenten Mittelwertbilder (18) und/oder dem inkohärenten Mittelwertbilder (22) Verstärkungs- oder Dämpfungselemente (30, 31) angeordnet sind, um das Gewichtungsverhältnis (G1/G2) des Ausgangs des kohärenten Mittelwertbilder (18) in Bezug auf den Ausgang des inkohärenten Mittelwertbilders (22) zu verändern.

**Claims**

1. Method of synchronising on a pilot sequence (Pilot) of a CDMA signal overlaid with data sequences (Dat.), comprising the following method steps:

   - correlation (17) of the total signal (S) consisting of the transmitted pilot sequence (Pilot) and transmitted data sequences (Dat.) with a reference pilot sequence (RP);
   - subtraction (24) of the correlation result, delayed by one or more symbol lengths of the pilot sequence (Pilot) from the current correlation result to suppress the pilot sequence (Pilot) and subsequent incoherent averaging (22) over several symbol lengths of the pilot sequence (Pilot),
   - additional coherent averaging (18) of the correlation result over several symbol lengths of the pilot sequence (Pilot),
   - subtraction (29) of the incoherent averaging result from the coherent averaging result, and
   - determination (35) of the maximum.

2. Method according to Claim 1,
   **characterized in that**
   the CDMA signal is subdivided into several time slots (slot), and after subtraction (29) of the incoherent averaging result from the coherent averaging result, an averaging (32) over several time slots (slot) takes place.

3. Method according to Claim 1 or 2,
   **characterized in that**
   the coherent averaging (18) is performed by summation (19) over several symbol lengths of the pilot sequence (Pilot) and subsequent magnitude formation (21).

4. Method according to one of Claims 1 to 3,
   **characterized in that**
   the incoherent averaging (22) is performed by magnitude formation (26) and subsequent summation (27) over several symbol lengths of the pilot sequence (Pilot).

5. Method according to one of Claims 1 to 4,
   **characterized in that**
   a weighting (30, 31) of the incoherent averaging result and the coherent averaging result is carried out before the subtraction (29) of the incoherent averaging result from the coherent averaging result.

6. Device (16) for synchronising on a pilot sequence (Pilot) of a CDMA signal which is overlaid with data sequences (Dat.), comprising
   a correlator (17), which correlates the total signal (S) consisting of the transmitted pilot sequence (Pilot) and transmitted data sequences (Dat.) with a reference pilot sequence (RP),
   a first time-delay element (25), which delays the output signal of the correlator (17) by one or more symbol lengths of the pilot sequence (Pilot),
   a first subtractor (24), which subtracts the output signal delayed in the first time-delay element (25) from the current output signal of the correlator (17),
   an incoherent averaging unit (22), which incoherently averages the output signal of the first subtractor (24) over several symbol lengths of the pilot sequence (Pilot), a coherent averaging unit (18), which coherently averages the output signal of the correlator (17) over several symbol lengths of the pilot sequence (Pilot),
   a second subtractor (29), which subtracts the output signal of the incoherent averaging unit (22) from the output signal of the coherent averaging unit (18), and
   a device (35), which determines the maximum of the output signal.

7. Device according to Claim 6,
   **characterized in that**
   the CDMA signal is subdivided into several time slots (slot), and an averaging unit (32) which averages the output signal of the second subtractor (29) over several time slots (slot) is connected to the output of the second subtractor (29).

**8.** Device according to Claim 6 or 7,
**characterized in that**
the coherent averaging unit (18) consists of a first summator (19), a second time-delay element (20) connecting the output of the first summator (19) to an input of the first summator (19), which second time-delay element (20) delays by one or more symbol lengths of the pilot sequence (Pilot), and a first magnitude-forming element (21) connected to the output of the first summator (19).

**9.** Device according to one of Claims 6 to 8,
**characterized in that**
the incoherent averaging unit (22) consists of a second summator (27), a third time-delay element (28) connecting the output of the second summator (27) to an input of the second summator (27), which third time-delay element (28) delays by one or more symbol lengths of the pilot sequence (Pilot), and a second magnitude-forming element (26) connected to the input of the second summator (27).

**10.** Device according to one of Claims 6 to 9,
**characterized in that**
amplifying or attenuating elements (30, 31) are connected to the output of the coherent averaging unit (18) and/or the output of the incoherent averaging unit (22) in order to change the weighting ratio (G1/G2) of the output of the coherent averaging unit (18) in relation to the output of the incoherent averaging unit (22).

**Revendications**

**1.** Procédé pour la synchronisation sur une séquence pilote (Pilot) d'un signal CDMA qui est superposée avec des séquences de données (Dat.), comprenant les étapes suivantes:

- corrélation (17) du signal complet (S) composé de la séquence pilote (Pilot) transmise et de séquences de données (Dat.) transmises avec une séquence pilote de référence (RP),
- soustraction (24) du résultat de corrélation, retardé d'une ou de plusieurs durées de symbole de la séquence pilote (Pilot), du résultat de corrélation actuel pour la suppression de la séquence pilote (Pilot) ensuite calcul de la valeur moyenne incohérente (22) pour plusieurs durées de symbole de la séquence pilote (Pilot),
- En plus, calcul de moyenne cohérente (18) du résultat de corrélation pour plusieurs durées de symbole de la séquence pilote (Pilot),
- soustraction (29) du résultat du calcul de moyenne incohérente du résultat de calcul de moyenne cohérente et
- détermination (35) du maximum.

**2.** Procédé selon la revendication 1,
**caractérisé en ce que**
le signal CDMA est subdivisé en plusieurs tranches de temps (slot) et un calcul de valeur moyenne (32) sur plusieurs tranches de temps (slot) est effectué après la soustraction (29) du résultat de calcul de moyenne incohérente du résultat de calcul de moyenne cohérente.

**3.** Procédé selon la revendication 1 ou 2,
**caractérisé en ce que**
le calcul de valeur moyenne cohérente (18) s'effectue par la sommation (19) pour plusieurs durées de symbole de la séquence pilote (Pilot) et ensuite, formation de la valeur absolue (21).

**4.** Procédé selon l'une quelconque des revendications 1 à 3,
**caractérisé en ce que**
le calcul de la valeur moyenne incohérente (22) s'effectue par la formation de la valeur absolue (26) suivie de la sommation (27) pour plusieurs durées de symbole de la séquence pilote (Pilot).

**5.** Procédé selon l'une quelconque des revendications 1 à 4,
**caractérisé en ce que**,
avant la soustraction (29) du résultat de calcul de moyenne incohérente du résultat du calcul de valeur de moyenne cohérente, on effectue une pondération (30, 31) du résultat de calcul de moyenne incohérente et du résultat de calcul de moyenne cohérente.

**6.** Dispositif (16) pour la synchronisation sur une séquence pilote (Pilot) d'un signal CDMA qui est superposée avec des séquences de données (Dat.), comprenant
un corrélateur (17), qui met en corrélation le signal complet (S) composé de la séquence pilote (Pilot) transmise et de séquences de données (Dat.) transmises avec une séquence pilote de référence (RP),
un premier circuit à retard (25), qui retarde le signal de sortie du corrélateur (17) d'une ou de plusieurs durées de symbole de la séquence pilote (Pilot),
un premier soustracteur (24), qui soustrait le signal de sortie retardé dans le premier circuit à retard (25) du signal de sortie du corrélateur (17),
un calculateur de valeur moyenne incohérente (22), qui calcule la valeur moyenne incohérente du signal de sortie du premier soustracteur (24) pour plusieurs durées de symbole de la séquence pilote (Pilot),

un calculateur de valeur moyenne cohérente (18), qui calcule la valeur moyenne cohérente du signal de sortie du corrélateur (17) pour plusieurs durées de symbole de la séquence pilote (Pilot),

une second soustracteur (29), qui soustrait le signal de sortie du calculateur de valeur moyenne incohérente (22) du signal de sortie du calculateur de valeur moyenne cohérente (18) et

un dispositif (35) qui détermine le maximum du signal de sortie.

**7.** Dispositif selon la revendication 6,
**caractérisé en ce que**
le signal CDMA est subdivisé en plusieurs tranches de temps (slot) et un calculateur de valeur moyenne (32), qui calcule la moyenne du signal de sortie du second soustracteur (29) pour plusieurs tranches de temps (slots), est placé en aval du second soustracteur (29).

**8.** Dispositif selon la revendication 6 ou 7,
**caractérisé en ce que**
le calculateur de valeur moyenne cohérente (18) comprend un premier dispositif d'addition (19), un second circuit à retard (20) reliant la sortie du premier dispositif d'addition (19) à une entrée du premier dispositif d'addition (19), qui retarde d'une ou de plusieurs durées de symbole de la séquence pilote (Pilot) et un premier calculateur de la valeur absolue (21) disposé après le premier dispositif d'addition (19).

**9.** Dispositif selon l'une quelconque des revendications 6 à 8,
**caractérisé en ce que**
le calculateur de valeur moyenne incohérente (22) comprend un second dispositif d'addition (27), un troisième circuit à retard (28) reliant la sortie du second dispositif d'addition (27) à une entrée du second dispositif d'addition (27), qui retarde d'une ou de plusieurs durées de symbole de la séquence pilote (Pilot), et un second calculateur de la valeur absolue (26) disposé avant le second dispositif d'addition (27).

**10.** Dispositif selon l'une quelconque des revendications 6 à 9,
**caractérisé en ce que**
des éléments d'amplification ou d'atténuation (30, 31) sont disposés après le calculateur de valeur moyenne cohérente (18) et/ou le calculateur de valeur moyenne incohérente (22), afin de modifier le quotient de pondération (G1/G2) de la sortie du calculateur de valeur moyenne cohérente (18) par rapport à la sortie du calculateur de valeur moyenne incohérente (22).

Spreading code

DPCCH — $\otimes$ spr. Pilot — $\triangleright$ $\frac{1}{\sqrt{256}}$ 8

1

2

5

Spreading code

DPDCH — $\otimes$ Dat. — $\triangleright$ $\frac{1}{\sqrt{4}}$ 9

3

6

Scrambling code

$\oplus$ 11 — $\otimes$ — S

12 Pilot + Dat.

Spreading code

DPDCH - - - $\otimes$ - - Dat. - - $\triangleright$ $\frac{1}{\sqrt{4} \cdot j}$ 10

4

7

**Fig. 1**

**Stand der Technik**

E

13 $E\{|AKF+KKF|\}$

$E\{|KKF|\}$

15

14

$E\{|AKF|\}$

$t_0$

t

**Fig. 2**

Fig. 3A

Fig. 3B

Fig. 3C

Fig. 4

EP 1 354 421 B1